# FASCICULE DE BREVET EUROPEEN

(11) **EP 3 001 325 B1**
(45) Date de publication et mention de la délivrance du brevet: **04.04.2018**
(21) Numéro de dépôt: 15187272.8
(22) Date de dépôt: 29.09.2015
(51) Int. Cl.: G06F 13/42, H04B 3/54, G06F 1/26

(54) **PROCÉDÉ D' ALIMENTATION ET DE TRANSFERT DE DONNÉES PAR VOIE FILAIRE ENTRE UNE STATION MAÎTRE ET DES PÉRIPHÉRIQUES**
VERFAHREN ZUR ENERGIEVERSORGUNG UND DATENÜBERTRAGUNG ZWISCHEN VERKABELTER MASTER-STATION UND PERIPHERIEGERÄTEN
METHOD FOR PROVIDING POWER AND DATA TRANSFER BY WIRE BETWEEN MASTER AND PERIPHERALS

(30) Priorité: 29.09.2014 FR 1459226
(43) Date de publication de la demande: 30.03.2016
(73) Titulaire: Riedinger, Jean-Claude, 27720 Dangu (FR)
(72) Inventeur: Riedinger, Jean-Claude, 27720 Dangu (FR)
(74) Mandataire: GIE Innovation Competence Group

(56) Documents cités:
- WO-A1-2010/010278
- WO-A1-2014/022603
- US-A1- 2009 195 179
- US-A1- 2010 084 985
- US-A1- 2011 261 969

## Description

### DOMAINE DE L'INVENTION

La présente invention concerne le domaine de l'alimentation électrique et le transfert de données par voie filaire entre une station maître et un ensemble d'au moins un périphérique.

Plus précisément, l'invention concerne selon un premier de ses objets un procédé d'alimentation et de transfert de données par voie filaire entre une station maître (20, 20') et un ensemble d'au moins un périphérique (10, 11, 12, 13), chaque périphérique comprenant un ensemble d'au moins un dispositif électrique ou électronique (10_3) susceptible d'exécuter une fonction donnée, les périphériques étant reliés électriquement à la station maître en parallèle par l'intermédiaire d'un premier (F1) et d'un deuxième (F2) fil électrique, le procédé comprenant des étapes consistant à :
- Générer (100) un signal de sortie (SSM) depuis la station maître (20, 20'), le signal de sortie comprenant une trame de données, la trame comprenant un ensemble d'au moins un canal, chaque canal comprenant un ensemble d'au moins un bit et étant affecté à piloter une fonction donnée d'un dispositif électrique ou électronique (10_3) donné d'un périphérique donné,
- Coder (110) les données selon un protocole permettant de générer un signal de sortie (SSM) alternatif carré,
- Générer (120) un signal de synchronisation (SYNC) depuis la station maître, et
- Transmettre (130) ledit signal de synchronisation (SYNC) et ledit signal de sortie (SSM) vers l'ensemble de périphériques sur le premier et le deuxième fil électrique, et
- A réception dudit signal de sortie (SSM) par un périphérique, redresser (140) ledit signal de sortie pour alimenter en énergie électrique ledit périphérique.

Grâce à cette configuration, l'alimentation en énergie électrique et la transmission de données peut se faire sur les mêmes fils, ce qui est connu du document US20100084985. Il est essentiellement caractérisé en ce qu'il comprend en outre une étape consistant à :
piloter (190) un dispositif de consommation de courant (10_4) d'un périphérique, ledit dispositif de consommation de courant étant configuré pour générer au moins une salve de pics de consommation de courant pendant une durée T' prédéterminée lorsqu'il est activé.

Grâce à cette configuration, il est possible au minimum de détecter l'activité dudit périphérique.

Dans un mode de réalisation, il comprend en outre une étape (150) consistant à inclure ledit signal de synchronisation (SYNC) dans ledit signal de sortie (SSM), ledit signal de synchronisation étant également redressé pour alimenter en énergie électrique ledit périphérique.

Grâce à cette configuration, le même signal de sortie permet à la fois l'alimentation en énergie électrique et la transmission de données.

Dans un mode de réalisation, chaque périphérique comprend un microprocesseur programmable, le procédé comprenant des étapes consistant à :
- programmer (160) un microprocesseur programmable de la station maître pour positionner chaque canal dans le signal de sortie (SSM) selon un ordre prédéterminé par rapport audit signal de synchronisation (SYNC), et
- programmer (170) le microprocesseur programmable de chaque périphérique pour détecter dans le signal de sortie (SSM) l'ensemble d'au moins un canal qui lui est affecté.

Grâce à cette configuration, le signal de sortie peut être construit de sorte que chaque canal adresse une fonction donnée unique.

Dans un mode de réalisation, il comprend une étape consistant à :
- attribuer (180) une même valeur binaire à l'ensemble d'au moins un bit d'un canal lorsque la fonction du dispositif électrique ou électronique (10_3) correspondant audit canal ne doit pas être exécutée.

Grâce à cette configuration, la structure du signal de sortie reste identique, même si une fonction donnée n'est pas adressée ; chaque canal occupe toujours la même position dans le signal de sortie.

On peut prévoir une étape consistant à :
- émettre (200) depuis un périphérique un signal de consommation (CONS) comprenant un ensemble de canaux, chaque canal ayant un ensemble de bits de durée (T') correspondant à un dispositif électrique ou électronique d'un périphérique donné, le contenu des données d'un canal étant représentatif de l'activité dudit dispositif électrique ou électronique.

Grâce à cette configuration, le fonctionnement d'un périphérique ou les valeurs d'un capteur peuvent être transmis. Les deux fils électriques permettent ainsi la transmission de données par un signal de consommation émis par un périphérique, outre l'alimentation électrique et la transmission de données par le signal de sortie émis par la station maître.

On peut prévoir une étape consistant à :
- coder (210) le signal de consommation (CONS) de sorte que la présence d'une salve de pics de consommation de courant sur un bit correspond à une valeur binaire, et l'absence de salve de pics de consommation de courant sur un bit correspond à l'autre valeur binaire.

Grâce à cette configuration, le codage du signal de consommation est simple et rapide.

On peut prévoir une étape consistant à coder le signal de synchronisation (SYNC) de la trame de données comme une double inversion, sur deux périodes chacune, de la valeur du signal de données sur la dernière période de la trame de données précédente.

On peut prévoir une étape (220) consistant à programmer au moins un calculateur programmable d'au moins un périphérique de façon dynamique.

Grâce à cette configuration, le microprocesseur d'un périphérique peut être programmé par la station maître, grâce à un signal transmis sur les deux fils électriques permettant l'alimentation électrique et la transmission de données.

Selon un autre de ses objets, l'invention concerne un système d'alimentation et de transfert de données par voie filaire, susceptible de mettre en oeuvre le procédé selon l'invention, le système comprenant :
- Au moins une station maître (20, 20'),
- un ensemble de périphériques (10, 11, 12, 13),
- un premier fil électrique (F1) et un deuxième fil électrique (F2),
dans lequel
- les périphériques sont reliés électriquement à la station maître en parallèle par l'intermédiaire du premier et du deuxième fil électrique,
- la station maître assure l'alimentation en énergie électrique de l'ensemble des périphériques par le premier fil électrique ou par le deuxième fil électrique,
- des données peuvent être échangées entre la station maître et l'un au moins des périphériques dudit ensemble par le premier fil électrique ou par le deuxième fil électrique, et
- chaque périphérique comprend un redresseur (10_1), un décodeur (10_2) ou un calculateur programmable, et un ensemble d'au moins un dispositif électrique ou électronique (10_3),
- un périphérique pouvant comprendre en outre un dispositif de consommation de courant (10_4).

Enfin, l'invention concerne également un programme d'ordinateur comprenant des instructions de code de programme pour la mise en oeuvre du procédé selon l'invention lorsque ledit programme est exécuté sur un ordinateur.

L'invention présente un certain nombre d'avantages parmi lesquels :
- la station maître et les périphériques peuvent échanger des données de façon bidirectionnelle ;
- un périphérique peut être connecté au bus de l'invention sans polarité, dans un sens ou dans l'autre grâce à l'absence de polarité du signal ;
- le codage se fait à partir des transitions et non à partir de l'amplitude et le décodage s'effectue par mesure de durée entre les fronts successifs, ainsi les protocoles utilisés ne sont sensibles qu'aux fronts montants ou descendants des signaux et à la durée des bits, ce qui permet de s'affranchir de la valeur de l'amplitude desdits signaux ;
- de même, par le principe même du codage ne comprenant pas de composante continue quel que soit le flux de données qui sont codées, la tension disponible après redressement dans les périphériques est rigoureusement continue et totalement indépendante des données véhiculées par la modulation.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

- la figure 1 illustre un mode de réalisation du système selon l'invention,
- la figure 2 illustre deux formes d'un signal de synchronisation SYNC d'un signal de sortie SSM selon l'invention,
- la figure 3 illustre le codage selon le protocole BM,
- la figure 4 illustre le signal de sortie SSM selon l'invention,
- la figure 5 illustre le codage du signal de consommation CONS selon l'invention,
- la figure 6 illustre un mode de réalisation du procédé selon l'invention,
- la figure 7 illustre une forme de réalisation du signal de consommation CONS selon l'invention,
- la figure 8 illustre un mode de réalisation d'un système à double boucle selon l'invention,
- la figure 9 illustre un mode de réalisation d'un système à double boucle avec détecteurs de coupure de boucle selon l'invention,
- la figure 10 illustre un mode de réalisation d'un système à double boucle et double station maître selon l'invention, et
- la figure 11 illustre un mode de réalisation d'un périphérique selon l'invention.

### DESCRIPTION DETAILLEE

On entend indistinctement calculateur programmable, microcontrôleur et microprocesseur. Au sens de l'invention, il peut s'agir de tout dispositif de calcul programmable, DSP ou autre.

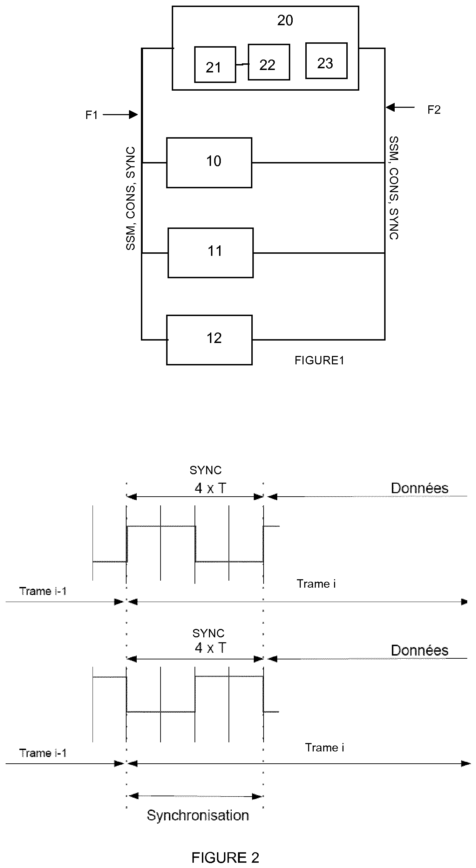

En référence à la figure 1, le système comprend une station maître 20, un inverseur 21 et un modulateur 22.

L'inverseur 21 est relié électriquement au modulateur 22 et permet de transformer un signal continu en un signal alternatif de forme carrée.

Le modulateur est configuré pour piloter l'inverseur de sorte à mettre en forme le signal de sortie émis par la station maître.

### Station maître

La station maître est alimentée en énergie électrique par tout moyen connu (non illustré), par exemple par une source de courant continu telle que des batteries ou par une source de courant alternatif telle qu'un secteur réseau.

La station maître comprend un calculateur programmable 23, par exemple un microprocesseur.

Au moins le modulateur est relié électriquement à la station maître. L'un au moins dudit inverseur et dudit modulateur peut être intégré à la station maître. En particulier, le modulateur peut être intégré dans le calculateur programmable. Alternativement, le modulateur peut être distant de la station maître.

En sortie de la station maître, on prévoit de générer 100 un signal de sortie SSM, et de coder 110 les données selon un protocole permettant de générer un signal de sortie SSM alternatif de forme carrée dont l'amplitude est comprise entre une tension haute positive (+V) et une tension basse négative (-V).

Le signal de sortie SSM est modulé par le modulateur selon un protocole décrit ultérieurement.

La station maître peut comprendre un module de communication (non illustré), filaire ou sans fil, pour communiquer avec un réseau LAN ou WAN ou tout autre équipement électronique, par exemple une interface homme machine (IHM), une télécommande, etc.

### Périphériques

Le système comprend également un ensemble de périphériques, ou modules récepteurs esclaves. Sur la figure 1, seuls trois périphériques 10, 11, 12 sont représentés.

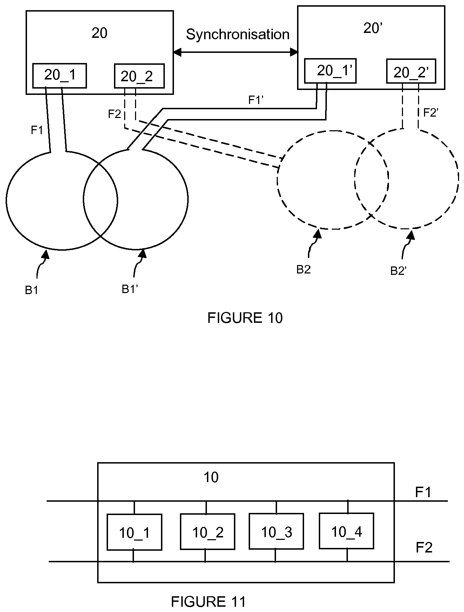

Chaque périphérique (figure 11) comprend un redresseur 10_1, un décodeur 10_2, et un ensemble d'au moins un dispositif électrique ou électronique 10_3 (de puissance ou non).

De préférence, le décodeur est un calculateur programmable, programmé au moins pour effectuer une fonction de décodage, par exemple un microcontrôleur.

Un dispositif électrique ou électronique peut être, par exemple, une lampe (LED ou autre), un moteur, une électrovanne, un capteur, etc. Chaque dispositif électrique ou électronique est connecté électriquement au calculateur programmé du périphérique et piloté par celui-ci.

Un dispositif électrique ou électronique d'un périphérique donné n'est alimenté en énergie et en données que par ce périphérique.

Un périphérique peut exercer une fonction unique ou une pluralité de fonctions.

De préférence, on prévoit qu'un périphérique comprend en outre un ensemble d'au moins un dispositif piloté de consommation de courant 10_4, par exemple sous forme de résistance montée en série avec un transistor, le dispositif de consommation de courant étant connecté électriquement au calculateur programmé du périphérique et piloté par celui-ci.

Certains au moins des composants d'un périphérique peuvent être intégrés sous forme de circuit intégré.

### Bus énergie et données

Le système comprend également au moins un premier fil électrique F1 et un deuxième fil électrique F2.

Les périphériques sont reliés électriquement à la station maître en parallèle par l'intermédiaire du premier et du deuxième fil électrique, le premier fil électrique et le deuxième fil électrique formant ainsi un bus, en l'espèce un bus énergie et données à deux fils, c'est à dire que le premier et le deuxième fil électrique permettent simultanément d'alimenter en énergie électrique l'ensemble de périphériques et d'échanger de données, dans un sens ou dans l'autre, entre la station maître et l'ensemble des périphériques.

L'alimentation en énergie électrique d'un périphérique est assurée par le signal de sortie émis par la station maître sur le premier fil électrique et sur le deuxième fil électrique.

Dans le sens descendant, c'est à dire depuis la station maître vers les périphériques, le transfert de données est assuré par le signal de sortie émis par la station maître sur le premier fil électrique et sur le deuxième fil électrique.

Dans le sens remontant, c'est à dire depuis un périphérique vers la station maître ou vers un autre périphérique via la station maître, le transfert de données est assuré par un signal de consommation CONS sur le premier fil électrique et sur le deuxième fil électrique.

Deux périphériques peuvent communiquer entre eux par l'intermédiaire du bus au travers de la station maître.

Tous les périphériques sont reliés à une même tension d'alimentation.

### Signal de sortie de la station maître

Le signal SSM de sortie de la station maître est un signal numérique modulé, carré, généré par le microprocesseur de la station maître, en l'espèce à partir d'un signal de données sous forme de table de données. Alternativement, le signal de données peut se présenter sous forme de signal numérique binaire. Le codage des données et l'adressage des périphériques sont mis en oeuvre par logiciel, en l'espèce embarqué dans la station maître.

Le signal de sortie SSM comprend une trame de données et au moins un signal de synchronisation SYNC.

Chaque trame de données est constituée d'une succession de bits qui adressent un ensemble de périphériques à un moment donné. Chaque bit a une durée prédéterminée, ou période, T. Pour une trame N comprenant N bits, la durée de la trame est N x T. Chaque trame comprend un nombre déterminé de bits. On peut prévoir que les trames aient toutes le même nombre de bits, ou que chaque trame ait un nombre de bits propre à chaque trame.

Chaque trame comprend un ensemble d'au moins un canal. Par « canal » on entend un ensemble de bits, de préférence consécutifs, permettant de piloter une fonction donnée d'un périphérique donné ou représentatifs de l'activité d'une fonction donnée d'un périphérique donné.

### Protocole descendant

Par concision, on entend par protocole descendant, le protocole de communication utilisé pour le codage de données sous forme de signal de sortie SSM, depuis la station maître vers un au moins des périphériques, avec T la durée (ou période) de chaque bit, permettant une communication descendante.

Différents protocoles sont possibles sous réserve qu'ils ne permettent de générer que des signaux exempts de composante continue.

De préférence, le protocole descendant mis en oeuvre pour le codage des données est le protocole BM ou BMC (pour Biphasé Mark Coding en anglais).

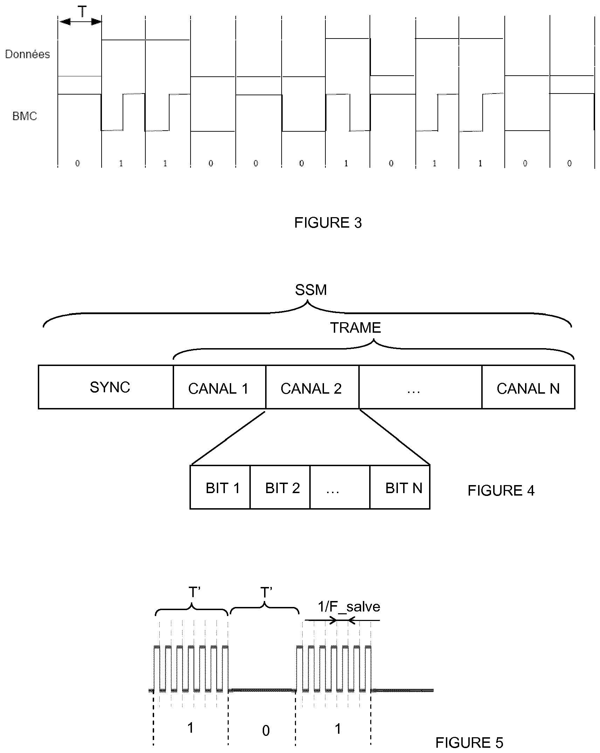

Le protocole BMC prévoit que (voir figure 3) :
- Si la valeur d'un signal de données est à 0 pour une période T donnée, alors la valeur de ce signal codé selon le protocole BMC est la valeur inversée dudit signal de données sur la période précédente, et
- Si la valeur du signal de données est à 1 pour une période T donnée, alors la valeur de ce signal codé selon le protocole BMC est une double inversion de la valeur dudit signal de données sur la période précédente.

Sur cette base, il est proposé ici d'ajouter audit signal de sortie un élément identifiable, éventuellement récurrent, permettant d'être utilisé comme balise temporelle, comme décrit ci-dessous.

### Synchronisation

Les périphériques sont synchronisés avec la station maître par un signal de synchronisation SYNC.

Le signal de synchronisation SYNC a une durée prédéterminée constante dans le temps, et une règle de codage unique. Il est généré 120 depuis la station maître.

Le signal de synchronisation SYNC et le signal de sortie SSM sont transmis 130 vers l'ensemble de périphériques sur le premier et le deuxième fil électrique.

Avantageusement, le signal de synchronisation SYNC est inclus 150 dans le signal de sortie. De préférence, on prévoit un seul signal de synchronisation SYNC par trame. De préférence également, le signal de synchronisation SYNC est inclus en début de trame.

Sur l'exemple illustré figure 2, le codage du signal SYNC est fait sur 4 bits, soit une durée de 4T. On peut prévoir d'autres valeurs de durée ou de bits, pour autant que la station maître et les périphériques soient tous programmés pour détecter ce signal de synchronisation.

En l'espèce la règle de codage unique du signal SYNC est la suivante : la valeur du signal de synchronisation SYNC d'une trame donnée est une double inversion, sur 2 périodes chacune, de la valeur du signal de données sur la dernière période de la trame précédente. Cette règle de codage est une entorse au protocole BMC, ce qui permet d'identifier facilement le signal SYNC dans le signal de sortie. A l'initialisation, pour la première trame, on peut prévoir l'une ou l'autre forme du signal de synchronisation de manière arbitraire.

La première inversion consiste à inverser la valeur du dernier bit de la trame précédente et à conserver cette valeur inversée sur 2 bis successifs ; et la deuxième inversion consiste à inverser la valeur de la première inversion et à conserver cette valeur inversée sur 2 bis successifs.

On peut donc avoir, pour une règle de codage unique, deux formes du signal SYNC selon que la valeur du signal de données sur la dernière période est à 0 ou à 1, comme illustré figure 2.

Grâce à cette règle de codage, le signal SYNC peut être détecté par les périphériques et différencié des données utiles (canaux) envoyées par la station maître.

Avantageusement, comme le signal de synchronisation SYNC est intégré dans le signal de sortie SSM, le signal de sortie permet donc à la fois de transmettre des données, d'alimenter en énergie les périphériques et de les synchroniser. En outre, le signal SYNC participe également à l'alimentation en énergie électrique des périphériques.

### Adressage

L'adressage d'un dispositif électrique ou électronique d'un périphérique donné consiste à coder, dans le signal de sortie SSM, le canal correspondant audit dispositif afin de piloter son fonctionnement.

A cet effet, on prévoit d'attribuer un canal individuel à chaque dispositif électrique ou électronique de chaque périphérique, la position dudit canal dans la trame, c'est à dire la position du 1^{er} bit du canal, et la longueur dudit canal, c'est à dire le nombre total de bits du canal, étant connues.

En particulier, la position du premier bit d'un canal est déterminée par rapport au signal de synchronisation SYNC.

La position de chaque canal pour l'ensemble des périphériques est attribuée par programmation 160 du calculateur programmable de la station maître permettant de positionner chaque canal dans le signal de sortie SSM selon un ordre prédéterminé par rapport audit signal de synchronisation SYNC, ledit programme étant enregistré dans une mémoire accessible au calculateur programmable de la station maître.

De façon similaire, on prévoit de programmer 170 le microprocesseur programmable de chaque périphérique pour détecter dans le signal de sortie SSM l'ensemble d'au moins un canal qui lui est affecté.

Une fois le signal de sortie reçu par un périphérique, le calculateur programmé dudit périphérique analyse les durées entre deux fronts du signal de sortie et ainsi décoder les données envoyée par la station maître sur le canal correspondant audit périphérique. La position du canal correspondant audit périphérique est programmée et enregistrée dans une mémoire accessible au calculateur programmable dudit périphérique.

On peut prévoir d'attribuer 180 une même valeur binaire à l'ensemble d'au moins un bit d'un canal lorsque la fonction du dispositif électrique ou électronique 10_3 correspondant audit canal ne doit pas être exécutée.

Cette attribution de canaux, ou adressage, est donc réalisée par programmation du microprocesseur de la station maître et par programmation du microprocesseur de chaque périphérique, ce qui peut être utilisé avantageusement, comme décrit ultérieurement.

En toute hypothèse, on peut adresser un périphérique par des bits non consécutifs mais cela complexifie le codage. Aussi de préférence, et comme considéré dans la présente description, un périphérique donné est adressé par un canal comprenant un nombre de bits consécutifs.

Le signal de sortie comprend donc au moins un signal de synchronisation et une trame comprenant au moins un canal. Une trame du signal de sortie peut comprendre une succession de canaux. Certains périphériques peuvent ne pas être adressés par un signal de sortie.

Si plusieurs périphériques peuvent exercer une même fonction, par exemple un éclairage de lampe, on peut prévoir qu'un canal donné permet de piloter la même fonction sur la pluralité de périphériques. Dans ce cas, les microprocesseurs desdits périphériques sont programmés pour décoder le même canal, ce qui permet de réduire la longueur de la trame.

### Alimentation en énergie des périphériques

Le signal de sortie est un signal alternatif de forme carré.

A réception du signal de sortie par un périphérique, le redresseur du périphérique redresse 140 ce signal de sortie. Le redresseur produit alors une tension continue qui permet d'alimenter ledit périphérique en énergie électrique.

Le signal de synchronisation SYNC participe donc également à l'alimentation des périphériques.

### Pilotage d'un périphérique

Le signal de sortie est reçu par tous les périphériques.

A réception du signal de sortie par un périphérique donné, on prévoit une étape d'identification consistant à, grâce à une application embarquée dans le calculateur programmable dudit périphérique, identifier dans le signal de sortie le signal de synchronisation et rechercher le canal correspondant audit périphérique.

Si l'identification du canal est positive, c'est à dire que le calculateur programmable dudit périphérique a trouvé le canal le concernant dans le signal de sortie, ledit calculateur décode alors ledit canal pour piloter le fonctionnement dudit dispositif électrique ou électronique dudit périphérique.

Si l'identification du canal est négative, c'est à dire que le calculateur programmable dudit périphérique n'a pas trouvé de canal le concernant dans le signal de sortie, alors le périphérique n'est pas adressé. Dans ce cas, le dispositif électrique ou électronique dudit périphérique peut par exemple rester dans l'état actif ou inactif dans lequel il était avant réception dudit signal de sortie.

### Protocole remontant

A ce stade, la station maître peut piloter au moins un dispositif électrique ou électronique d'un périphérique grâce au protocole descendant, mais ce protocole descendant ne lui permet ni de savoir si le pilotage est effectif (par exemple si le périphérique comprend une lampe, de savoir que celle-ci est allumée ou éteinte), ni de connaitre d'éventuelles valeurs issues de ce pilotage (par exemple si le périphérique comprend un capteur, de connaitre les valeurs des mesures effectuées par ce capteur).

Aussi, en combinaison ou à titre alternatif du protocole descendant, il est proposé un protocole remontant, c'est-à-dire un protocole de communication utilisé depuis un au moins des périphériques vers la station maître, permettant une communication remontante.

On peut prévoir que l'ensemble d'au moins un périphérique émet 200 un signal de consommation CONS sur le premier fil électrique et le deuxième fil électrique, ainsi la station maître et tout autre périphérique peut décoder le signal de consommation CONS.

A cet effet, on prévoit de piloter 190 le dispositif de consommation de courant d'un périphérique, en l'espèce grâce au calculateur programmable de celui-ci.

En fonctionnement, le dispositif de consommation de courant d'un périphérique donné est configuré pour générer une salve de pics de consommation de courant pendant une durée T' prédéterminée, en l'espèce par programmation du calculateur programmable dudit périphérique.

Le signal de consommation CONS est un signal alternatif et comprend un ensemble de bits de durée T' répartis sur un ensemble de canaux, chaque canal ayant un ensemble de bits de durée T' correspondant à un dispositif électrique ou électronique d'un périphérique donné, le contenu des données d'un canal étant représentatif de l'activité dudit dispositif électrique ou électronique. Pour le codage de celui-ci, on peut prévoir toute règle de codage approprié aux signaux alternatifs.

En l'espèce, la présence d'une salve sur une durée T' (un bit) est considérée comme une valeur binaire, en l'espèce 1 ; et l'absence de salve sur une durée T' (un bit) est considérée comme l'autre valeur binaire, en l'espèce 0.

Les bits de durée T' sont répartis en canaux, chaque canal correspondant à un dispositif électrique ou électronique d'un périphérique donné, le contenu des données d'un canal étant représentatif de l'activité dudit dispositif électrique ou électronique.

La durée T' prédéterminée est inférieure à la durée T, durée d'un bit selon le protocole descendant.

De préférence, T' est un sous-multiple de T, soit T'=T/N avec N un entier naturel.

Le débit de la communication remontante est donc N fois le débit de la communication descendante. En l'espèce N=2, soit T'=T/2.

Chaque salve de pics de consommation, c'est à dire chaque canal du signal de consommation, est synchronisée par rapport à un signal de synchronisation, en l'espèce par rapport au signal de synchronisation SYNC, ce qui permet de simplifier la synchronisation des signaux dans la communication descendante et dans la communication remontante.

De préférence, on choisit un ratio F_salve/F_SSM > 10, avec F_salve la fréquence des pics de consommation d'une salve donnée telle que F_salve soit un multiple de 1/T' et F_SSM la fréquence du signal de sortie. Par exemple, on peut choisir une fréquence F_salve égale à vingt fois celle du signal de sortie SSM.

Ainsi, la fréquence des pics de consommation ne peut pas être confondue par la station maître ou un périphérique avec la fréquence du signal du sortie, ce qui permet d'identifier sans ambigüité le signal de sortie par rapport au signal de consommation CONS.

Grâce à ce protocole remontant, il est possible de coder un signal numérique issu d'un périphérique.

A cet effet, on prévoit de coder 210 le signal de consommation CONS de sorte que la présence d'une salve de pics de consommation de courant sur un bit correspond à une valeur binaire, et l'absence de salve de pics de consommation de courant sur un bit correspond à l'autre valeur binaire. Ainsi, la présence d'une salve sur une durée T' équivaut à l'une des valeurs binaires 1 ou 0, et que l'absence d'une salve sur une durée T' équivaut à l'autre des valeurs binaires 1 ou 0. En l'espèce, voir figure 5, la présence d'une salve sur une durée T' équivaut à la valeur binaire 1.

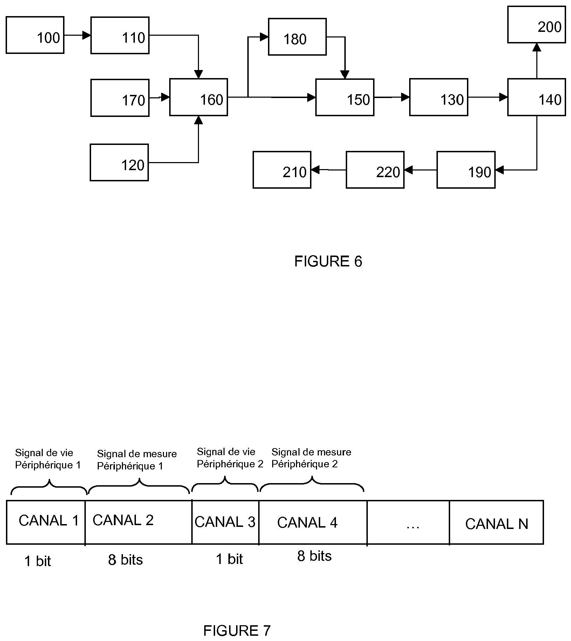

Comme illustré figure 7, on a par exemple :
- le premier canal (canal 1) du signal de consommation, codé sur 1 bit, qui est le signal de vie d'un périphérique (périphérique 1),
- le deuxième canal (canal 2) du signal de consommation, codé sur 8 bits, qui est le signal de mesure d'un capteur du même périphérique (périphérique 1),
- le troisième canal (canal 3) du signal de consommation, codé sur 1 bit, qui est le signal de vie d'un autre périphérique (périphérique 2),
- le quatrième canal (canal 4) du signal de consommation, codé sur 8 bits, qui est le signal de mesure d'un capteur de cet autre périphérique (périphérique 2),
- etc.

Les pics de consommation sont de préférence émis de manière synchronisée avec chaque donnée descendante. Si la durée T' n'est pas un sous-multiple exact de T, par exemple T'<T/2, alors on peut prévoir de center chaque bit du signal de consommation CONS sur la première ou la deuxième moitié de la durée T de la donnée du signal de sortie SSM.

La position du premier bit d'un premier canal d'un signal de consommation CONS d'un périphérique donné peut être différente de la position du premier bit du premier canal du signal de sortie SSM concernant ledit périphérique.

De préférence, on prévoit que chaque périphérique émet un signal de consommation CONS individuel, dit signal de vie, de préférence en permanence, et dont un canal quelconque, par exemple le premier canal, est codé sur un bit et est représentatif de l'activité dudit périphérique. Grâce à cette configuration, si un périphérique est opérationnel, le canal comprend une valeur binaire, en l'espèce 1, et s'il est en panne, le canal comprend l'autre valeur binaire, en l'espèce 0 ; ce qui permet de faciliter la détection de pannes.

Quand le dispositif électrique ou électronique exerce une fonction de commutation, par exemple un transistor, on peut prévoir que le signal de consommation comprend un canal, en l'espèce codé sur un bit, et représentatif de l'état de commutation.

Dans un autre exemple, combinable avec celui-ci-dessus, quand le dispositif électrique ou électronique exerce une fonction de mesure, par exemple par un capteur quelconque, on prévoit que le signal de consommation comprend un canal correspondant audit dispositif et que la mesure dudit capteur est codée sur l'ensemble de bits dudit canal.

### Décodage du signal CONS

Grâce au signal de sortie codé selon le protocole descendant et au signal de consommation codé selon le protocole remontant, les périphériques peuvent interagir entre eux au travers de la station maître dans un sens ou dans l'autre par le bus deux fils énergie et données.

La station maître peut contenir une application logicielle qui analyse les données reçues des différents périphériques connectés grâce au signal de consommation CONS et qui peut renvoyer les données traitées en retour au(x)dit(s) périphérique(s) ou à d'autres périphériques. Il est donc possible de constituer ainsi un système complexe où l'ensemble des périphériques sont interconnectés et peuvent interagir entre eux au travers du bus, ce qui peut être utile par exemple dans un véhicule automobile, par exemple en remplacement d'un bus CAN actuel.

### Programmation dynamique

On peut prévoir une étape 220 consistant à programmer au moins un calculateur programmable d'au moins un périphérique de façon dynamique.

A cet effet, on prévoit d'émettre depuis la station maître un deuxième signal de synchronisation SYNC2, différent du signal de synchronisation SYNC. On prévoit que les périphériques soient tous programmés pour détecter ce deuxième signal de synchronisation. La durée du deuxième signal de synchronisation SYNC2 est par exemple faite sur un multiple de celle du signal de synchronisation SYNC, avec la même règle de codage.

De manière similaire à la communication descendante, on prévoit d'attribuer un ensemble de canaux synchronisés par rapport au deuxième signal de synchronisation SYNC2, chaque canal comprenant des bits de données de programmation d'un calculateur programmable donné d'un périphérique donné.

Une fois le signal de sortie reçu par un périphérique, le calculateur programmé dudit périphérique détecte le deuxième signal de synchronisation SYNC2, repère le ou les canaux correspondants, décode les données contenues dans le ou lesdits canaux en analysant les durées entre deux fronts du signal de sortie.

### Sécurisation, redondance

Par ailleurs, on peut prévoir d'équiper le système d'autres fils électriques en double boucle, redondants avec le premier fil électrique ou avec le deuxième fil électrique, ce qui permet d'assurer une sécurité physique en cas de rupture d'un des fils électriques.

On peut prévoir un système multi bus à nombre pair de fils, par exemple 2, 4 ou 6 fils câblés en boucle, ce qui permet d'assurer une très grande fiabilité, en particulier par rapport aux ruptures de liaisons de l'une des boucles.

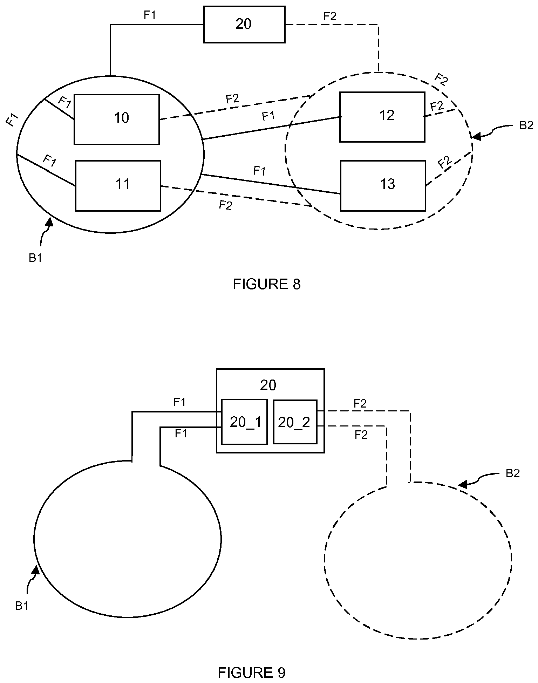

Comme illustrée figure 8, une première boucle B1 du premier fil électrique F1 est représentée en trait plein, et une deuxième boucle B2 du deuxième fil électrique F2 est représentée en traits pointillés.

Dans cet exemple, un premier ensemble de périphériques, en l'espère les périphériques 10 et 11 sur la figure 8, sont alimentés par le premier fil F1 de la première boucle B1 et par le deuxième fil F2 de la deuxième boucle B2 ; et un deuxième ensemble de périphériques, en l'espère les périphériques 12 et 13 sur la figure 8, sont alimentés par le premier fil F1 de la première boucle B1 et par le deuxième fil F2 de la deuxième boucle B2.

Ce mode de réalisation permet au système de supporter une coupure par boucle : les périphériques restent alimentés en énergie et en données malgré une coupure physique du fil F1 sur la boucle B1 ou une coupure physique du fil F2 sur la boucle B2.

Une station maître peut être équipée de détecteur(s) de coupure de boucle qui informe le système de l'interruption d'une boucle.

Le système illustré figure 9 est basé sur le système illustré figure 8 dans lequel les périphériques ne sont pas représentés.

Dans ce mode de réalisation, la station maître 20 est équipée d'un premier détecteur de coupure de boucle 20_1, relié au premier fil F1 de la première boucle B1 et configuré pour détecter une coupure de ladite première boucle B1. La station maître 20 est également équipée d'un deuxième détecteur de coupure de boucle 20_2, relié au deuxième fil F2 de la deuxième boucle B2 et configuré pour détecter une coupure de ladite deuxième boucle B2.

Comme illustré figure 10, le système peut comprendre une pluralité de stations maîtres. Par concision, la figure 10 illustre uniquement une première station maître 20 et une deuxième station maître 20', synchronisées entre elles par un signal de synchronisation, ledit signal de synchronisation étant éventuellement le signal SYNC.

Chaque station maître 20, 20' illustrée sur la figure 10 peut être identique à la station maître 20 illustrée sur la figure 9.

Dans ce cas, la première station maître 20 est équipée :
- d'un premier détecteur de coupure de boucle 20_1, relié au premier fil F1 de la première boucle B1 et configuré pour détecter une coupure de ladite première boucle B1, et
- d'un deuxième détecteur de coupure de boucle 20_2, relié au deuxième fil F2 de la deuxième boucle B2 et configuré pour détecter une coupure de ladite deuxième boucle B2.

La deuxième station maître 20' est équipée :
- d'un premier détecteur de coupure de boucle 20_1', relié au premier fil F1' de la première boucle B1 et configuré pour détecter une coupure de ladite première boucle B1', et
- d'un deuxième détecteur de coupure de boucle 20_2', relié au deuxième fil F2' de la deuxième boucle B2' et configuré pour détecter une coupure de ladite deuxième boucle B2'.

Ce mode de réalisation en double boucle et double station maître équipée de détecteurs de coupure de boucle permet de supporter la perte de l'une des stations maîtres ou plus d'une rupture par boucle associée ; une rupture sur chaque boucle de l'autre station maître, ainsi qu'une panne partielle du module récepteur.

## Revendications

1. Procédé d'alimentation et de transfert de données par voie filaire entre une station maître (20, 20') et un ensemble d'au moins un périphérique (10, 11, 12, 13), chaque périphérique comprenant un ensemble d'au moins un dispositif électrique ou électronique (10_3) susceptible d'exécuter une fonction donnée, les périphériques étant reliés électriquement à la station maître en parallèle par l'intermédiaire d'un premier (F1) et d'un deuxième (F2) fil électrique, le procédé comprenant des étapes consistant à :
- Générer (100) un signal de sortie (SSM) depuis la station maître (20, 20'), le signal de sortie comprenant une trame de données, la trame comprenant un ensemble d'au moins un canal, chaque canal comprenant un ensemble d'au moins un bit et étant affecté à piloter une fonction donnée d'un dispositif électrique ou électronique (10_3) donné d'un périphérique donné,
- Coder (110) les données selon un protocole permettant de générer un signal de sortie (SSM) alternatif carré,
- Générer (120) un signal de synchronisation (SYNC) depuis la station maître, et
- Transmettre (130) ledit signal de synchronisation (SYNC) et ledit signal de sortie (SSM) vers l'ensemble de périphériques sur le premier et le deuxième fil électrique, et
- à réception dudit signal de sortie (SSM) par un périphérique, redresser (140) ledit signal de sortie pour alimenter en énergie électrique ledit périphérique,
**Caractérisé en ce que** le procédé comprend en outre une étape consistant à :
- piloter (190) un dispositif de consommation de courant (10_4) d'un périphérique dudit ensemble d'au moins un périphérique (10, 11, 12, 13), ledit dispositif de consommation de courant étant configuré pour générer au moins une salve de pics de consommation de courant pendant une durée T' prédéterminée lorsqu'il est activé.

2. Procédé selon la revendication 1, comprenant une étape (150) consistant à inclure ledit signal de synchronisation (SYNC) dans ledit signal de sortie (SSM), ledit signal de synchronisation étant également redressé pour alimenter en énergie électrique ledit périphérique.

3. Procédé selon la revendication 2, dans lequel chaque périphérique comprend un microprocesseur programmable, le procédé comprenant des étapes consistant à :
- programmer (160) un microprocesseur programmable de la station maître pour positionner chaque canal dans le signal de sortie (SSM) selon un ordre prédéterminé par rapport audit signal de synchronisation (SYNC), et
- programmer (170) le microprocesseur programmable de chaque périphérique pour détecter dans le signal de sortie (SSM) l'ensemble d'au moins un canal qui lui est affecté.

4. Procédé selon l'une quelconque des revendications précédentes, comprenant une étape consistant à :
- attribuer (180) une même valeur binaire à l'ensemble d'au moins un bit d'un canal lorsque la fonction du dispositif électrique ou électronique (10_3) correspondant audit canal ne doit pas être exécutée.

5. Procédé selon l'une quelconque des revendications précédentes, comprenant une étape consistant à :
- émettre (200) depuis un périphérique un signal de consommation (CONS) comprenant un ensemble de canaux, chaque canal ayant un ensemble de bits de durée (T') correspondant à un dispositif électrique ou électronique d'un périphérique donné, le contenu des données d'un canal étant représentatif de l'activité dudit dispositif électrique ou électronique.

6. Procédé selon la revendication 5, comprenant une étape consistant à :
- coder (210) le signal de consommation (CONS) de sorte que la présence d'une salve de pics de consommation de courant sur un bit correspond à une valeur binaire, et l'absence de salve de pics de consommation de courant sur un bit correspond à l'autre valeur binaire.

7. Procédé selon l'une quelconque des revendications précédentes, comprenant une étape consistant à :
- Coder le signal de synchronisation (SYNC) de la trame de données comme une double inversion, sur deux périodes chacune, de la valeur du signal de données sur la dernière période de la trame de données précédente.

8. Procédé selon l'une quelconque des revendications précédentes, comprenant une étape (220) consistant à programmer au moins un calculateur programmable d'au moins un périphérique de façon dynamique.

9. Système d'alimentation et de transfert de données par voie filaire, susceptible de mettre en oeuvre le procédé selon l'une quelconque des revendications précédentes, le système comprenant :
- Au moins une station maître (20, 20'),
- un ensemble de périphériques (10, 11, 12, 13),
- un premier fil électrique (F1) et un deuxième fil électrique (F2),
dans lequel
- les périphériques sont reliés électriquement à la station maître en parallèle par l'intermédiaire du premier et du deuxième fil électrique,
- la station maître assure l'alimentation en énergie électrique de l'ensemble des périphériques par le premier fil électrique ou par le deuxième fil électrique,
- des données peuvent être échangées entre la station maître et l'un au moins des périphériques dudit ensemble par le premier fil électrique ou par le deuxième fil électrique, et
- chaque périphérique comprend un redresseur (10_1), un décodeur (10_2) ou un calculateur programmable, et un ensemble d'au moins un dispositif électrique ou électronique (10_3),
- un périphérique dudit ensemble d'au moins un périphérique (10, 11, 12, 13) comprenant en outre un dispositif de consommation de courant (10_4) configuré pour générer au moins une salve de pics de consommation de courant pendant une durée T' prédéterminée lorsqu'il est activé.

10. Programme d'ordinateur comprenant des instructions de code de programme pour la mise en oeuvre du procédé selon l'une quelconque des revendications 1 à 8 lorsque ledit programme est exécuté sur un ordinateur.

## Patentansprüche

1. Verfahren zur Energieversorgung und Datenübertragung zwischen einer verkabelten Master-Station (20, 20') und einer Anordnung von mindestens einem Peripheriegerät (10, 11, 12, 13), wobei jedes Peripheriegerät eine Anordnung von mindestens einer elektrischen oder elektronischen Vorrichtung (10_3) umfasst, die zur Ausführung einer bestimmten Funktion geeignet ist, wobei die Peripheriegeräte mittels eines ersten (F1) und eines zweiten (F2) elektrischen Drahts parallel elektrisch mit der Master-Station verbunden sind, wobei das Verfahren Schritte umfasst, die in Folgendem bestehen:
- Erzeugen (100) eines Ausgangssignals (SSM) von der Master-Station (20, 20'), wobei das Ausgangssignal einen Datenrahmen umfasst, wobei der Rahmen eine Anordnung von mindestens einem Kanal umfasst, wobei jeder Kanal eine Anordnung von mindestens einem Bit umfasst und dafür vorgesehen ist, eine bestimmte Funktion einer bestimmten elektrischen oder elektronischen Vorrichtung (10_3) eines bestimmten Peripheriegerätes zu steuern,
- Kodieren (110) der Daten nach einem Protokoll, das die Erzeugung eines alternativen Rechteck-Ausgangssignals (SSM) ermöglicht,
- Erzeugen (120) eines Synchronisationssignals (SYNC) von der Master-Station und
- Übertragen (130) des Synchronisationssignals (SYNC) und des Ausgangssignals (SSM) zur Anordnung der Peripheriegeräte auf dem ersten und dem zweiten elektrischen Draht und
- bei Empfang des Ausgangssignals (SSM) durch ein Peripheriegerät Gleichrichten (140) des Ausgangssignals zur Versorgung des Peripheriegerätes mit elektrischer Energie,
**dadurch gekennzeichnet, dass** das Verfahren außerdem einen Schritt umfasst, der in Folgendem besteht:
- Steuern (190) einer Stromverbrauchsvorrichtung (10_4) eines Peripheriegerätes der Anordnung von mindestens einem Peripheriegerät (10, 11, 12, 13), wobei die Stromverbrauchsvorrichtung dafür konfiguriert ist, bei Aktivierung mindestens eine Impulsfolge von Stromverbrauchsspitzen während einer vorbestimmten Dauer T' zu erzeugen.

2. Verfahren nach Anspruch 1, umfassend einen Schritt (150), der darin besteht, das Synchronisationssignal (SYNC) in das Ausgangssignal (SSM) aufzunehmen, wobei das Synchronisationssignal ebenfalls gleichgerichtet wird, um das Peripheriegerät mit Energie zu versorgen.

3. Verfahren nach Anspruch 2, in dem jedes Peripheriegerät einen programmierbaren Mikroprozessor umfasst, wobei das Verfahren Schritte umfasst, die in Folgendem bestehen:
- Programmieren (160) eines programmierbaren Mikroprozessors der Master-Station zum Positionieren jedes Kanals im Ausgangssignal (SSM) gemäß einer vorbestimmten Reihenfolge im Verhältnis zum Synchronisationssignal (SYNC) und
- Programmieren (170) des programmierbaren Mikroprozessors jedes Peripheriegerätes zum Erkennen der Anordnung von mindestens einem ihm zugewiesenen Kanal im Ausgangssignal (SSM).

4. Verfahren nach einem der vorhergehenden Ansprüche, umfassend einen Schritt, der in Folgendem besteht:
- Zuordnen (180) eines gleichen Binärwertes zu der Anordnung von mindestens einem Bit eines Kanals, wenn die Funktion der elektrischen oder elektronischen Vorrichtung (10_3), die dem Kanal entspricht, nicht ausgeführt werden darf.

5. Verfahren nach einem der vorhergehenden Ansprüche, umfassend einen Schritt, der in Folgendem besteht:
- Ausgeben (200) eines Verbrauchssignals (CONS) umfassend eine Anordnung von Kanälen durch ein Peripheriegerät, wobei jeder Kanal eine Anordnung von Dauer-Bits (T') aufweist, die einer elektrischen oder elektronischen Vorrichtung eines bestimmten Peripheriegeräts entsprechen, wobei der Inhalt der Daten eines Kanals für die Aktivität der elektrischen oder elektronischen Vorrichtung repräsentativ ist.

6. Verfahren nach Anspruch 5, umfassend einen Schritt, der in Folgendem besteht:
- Kodieren (210) des Verbrauchssignals (CONS) derart, dass die Anwesenheit einer Impulsfolge von Stromverbrauchsspitzen auf einem Bit einem Binärwert entspricht und die Abwesenheit einer Impulsfolge von Stromverbrauchsspitzen auf einem Bit dem anderen Binärwert entspricht.

7. Verfahren nach einem der vorhergehenden Ansprüche, umfassend einen Schritt, der in Folgendem besteht:
- Kodieren des Sychronisationssignals (SYNC) des Datenrahmens als jeweils in zwei Perioden erfolgende doppelte Inversion des Wertes des Datensignals in der ersten Periode des vorhergehenden Datenrahmens.

8. Verfahren nach einem der vorhergehenden Ansprüche, umfassend einen Schritt (220), der darin besteht, mindestens einen programmierbaren Rechner mindestens eines Peripheriegerätes dynamisch zu programmieren.

9. System zur Energieversorgung und Datenübertragung über Kabel, geeignet zur Durchführung des Verfahrens nach einem der vorhergehenden Ansprüche, wobei das System umfasst:
- mindestens eine Master-Station (20, 20'),
- eine Anordnung von Peripheriegeräten (10, 11, 12, 13),
- einen ersten elektrischen Draht (F1) und einen zweiten elektrischen Draht (F2), bei dem
- die Peripheriegeräte mittels des ersten und des zweiten elektrischen Drahtes parallel elektrisch mit der Master-Station verbunden sind,
- die Master-Station über den ersten elektrischen Draht oder über den zweiten elektrischen Draht die Versorgung der Anordnung der Peripheriegeräte mit elektrischer Energie sicherstellt,
- die Daten über den ersten elektrischen Draht oder über den zweiten elektrischen Draht zwischen der Master-Station und mindestens einem der Peripheriegeräte der Anordnung ausgetauscht werden können und
- jedes Peripheriegerät einen Gleichrichter (10_1), einen Dekodierer (10_2) oder einen programmierbaren Rechner und eine Anordnung von mindestens einer elektrischen oder elektronischen Vorrichtung (10_3) umfasst,
- ein Peripheriegerät der Anordnung von mindestens einem Peripheriegerät (10, 11, 12, 13) außerdem eine Stromverbrauchsvorrichtung (10_4) umfasst, die dafür konfiguriert ist, bei Aktivierung mindestens eine Impulsfolge von Stromverbrauchsspitzen während einer vorbestimmten Dauer T' zu erzeugen.

10. Computerprogramm, umfassend Programmcodeanweisungen zur Durchführung des Verfahrens nach einem der Ansprüche 1 bis 8, wenn das Programm auf einem Rechner ausgeführt wird.

## Claims

1. Method for supplying power and transferring data by wire between a master station (20, 20') and a set of at least one peripheral device (10, 11, 12, 13), each peripheral device comprising a set of at least one electrical or electronic device (10_3) able to execute a given function, the peripheral devices being linked electrically in parallel to the master station by way of a first (F1) and of a second (F2) electrical wire, the method comprising steps consisting in:
- generating (100) an output signal (SSM) from the master station (20, 20'), the output signal comprising a data frame, the frame comprising a set of at least one channel, each channel comprising a set of at least one bit and being assigned to drive a given function of a given electrical or electronic device (10_3) of a given peripheral device,
- coding (110) the data in accordance with a protocol that makes it possible to generate a square-wave AC output signal (SSM),
- generating (120) a synchronization signal (SYNC) from the master station, and
- transmitting (130) said synchronization signal (SYNC) and said output signal (SSM) to the set of peripheral devices on the first and the second electrical wire, and
- upon receipt of said output signal (SSM) by a peripheral device, rectifying (140) said output signal so as to supply said peripheral device with electric power,
**characterized in that** the method furthermore comprises a step consisting in:
- driving (190) a current-consuming device (10_4) of a peripheral device of said set of at least one peripheral device (10, 11, 12, 13), said current-consuming device being configured to generate at least one burst of current consumption peaks for a predetermined duration T' when it is activated.

2. Method according to Claim 1, comprising a step (150) consisting in including said synchronization signal (SYNC) in said output signal (SSM), said synchronization signal also being rectified so as to supply said peripheral device with electric power.

3. Method according to Claim 2, wherein each peripheral device comprises a programmable microprocessor, the method comprising steps consisting in:
- programming (160) a programmable microprocessor of the master station so as to position each channel in the output signal (SSM) in a predetermined order with respect to said synchronization signal (SYNC), and
- programming (170) the programmable microprocessor of each peripheral device so as to detect, in the output signal (SSM), the set of at least one channel assigned thereto.

4. Method according to any one of the preceding claims, comprising a step consisting in:
- assigning (180) one and the same binary value to the set of at least one bit of a channel when the function of the electrical or electronic device (10_3) corresponding to said channel is not to be executed.

5. Method according to any one of the preceding claims, comprising a step consisting in:
- transmitting (200), from a peripheral device, a consumption signal (CONS) comprising a set of channels, each channel having a set of bits of duration (T') corresponding to an electrical or electronic device of a given peripheral device, the content of the data of a channel being representative of the activity of said electrical or electronic device.

6. Method according to Claim 5, comprising a step consisting in:
- coding (210) the consumption signal (CONS) such that the presence of a burst of current consumption peaks on a bit corresponds to one binary value, and the absence of a burst of current consumption peaks on a bit corresponds to the other binary value.

7. Method according to any one of the preceding claims, comprising a step consisting in:
- coding the synchronization signal (SYNC) of the data frame as a double inversion, each over two periods, of the value of the data signal over the last period of the preceding data frame.

8. Method according to any one of the preceding claims, comprising a step (220) consisting in dynamically programming at least one programmable computer of at least one peripheral device.

9. System for supplying power and transferring data by wire, able to implement the method according to any one of the preceding claims, the system comprising:
- at least one master station (20, 20'),
- a set of peripheral devices (10, 11, 12, 13),
- a first (F1) and a second (F2) electrical wire,
wherein
- the peripheral devices are linked electrically in parallel to the master station by way of the first and of the second electrical wire,
- the master station provides the supply of electric power to the set of peripheral devices via the first electrical wire or via the second electrical wire,
- the data are able to be exchanged between the master station and at least one of the peripheral devices of said set via the first electrical wire or via the second electrical wire, and
- each peripheral device comprises a rectifier (10_1), a decoder (10_2) or a programmable computer, and a set of at least one electrical or electronic device (10_3),
- a peripheral device of said set of at least one peripheral device (10, 11, 12, 13) furthermore comprising a current-consuming device (10_4) configured to generate at least one burst of current consumption peaks for a predetermined duration T' when it is activated.

10. Computer program comprising program code instructions for implementing the method according to any one of Claims 1 to 8 when said program is executed on a computer.
